# EUROPÄISCHE PATENTSCHRIFT

(11) **EP 3 766 734 B1**
(45) Veröffentlichungstag und Bekanntmachung des Hinweises auf die Patenterteilung: **21.02.2024**
(21) Anmeldenummer: 20181158.5
(22) Anmeldetag: 19.06.2020
(51) Int. Cl.: B60P 1/64, B60P 7/08

(54) **FESTLEGEVORRICHTUNG ZUM FESTLEGEN EINES WECHSELBEHÄLTERS IN ODER AN EINEM AUFNAHMEBEREICH EINES FAHRZEUGS SOWIE FAHRZEUG MIT EINER DERARTIGEN FESTLEGEVORRICHTUNG**
LOCKING DEVICE FOR LOCKING AN INTERCHANGEABLE CONTAINER IN OR AT A RECEPTION AREA OF A VEHICLE AND VEHICLE WITH SUCH A LOCKING DEVICE
DISPOSITIF DE VERROUILLAGE POUR VERROUILLER UN RÉCIPIENT INTERCHANGEABLE DANS UNE ZONE DE RÉCEPTION D'UN VÉHICULE ET VÉHICULE AVEC UN TEL DISPOSITIF DE VERROUILLAGE

(30) Priorität: 19.07.2019 DE 102019119691
(43) Veröffentlichungstag der Anmeldung: 20.01.2021
(73) Patentinhaber: Onomotion GmbH, 12435 Berlin (DE)
(72) Erfinder: Scholtes, Tobias, 38120 Braunschweig (DE); Kahle, Philipp, 13353 Berlin (DE); Löffler, Norman, 10247 Berlin (DE); Epp, Tillmann, 12161 Berlin (DE)
(74) Vertreter: Schorr, Peter Karl

(56) Entgegenhaltungen:
- EP-A1- 2 420 406
- DE-C- 661 878
- DE-U1-202016 106 717

## Beschreibung

Die Erfindung betrifft ein System aus Fahrzeug und Wechselbehälter mit einem Aufnahmebereich des Fahrzeugs und mit mindestens einer Festlegevorrichtung zum Festlegen des Wechselbehälters in oder an dem Aufnahmebereich des Fahrzeugs, die mindestens eine im Aufnahmebereich angeordnete Stützstruktur, die mindestens einen im Aufnahmebereich angeordneten Aufnahmeboden, die mindestens ein zum Aufnahmeboden beabstandetes schienenartiges Führungsmittel, das an der Stützstruktur oder am Wechselbehälter festgelegt ist und das eine Führungsfläche aufweist, und die mindestens ein am Wechselbehälter, bzw. an der Stützstruktur angeordnetes Stützmittel umfasst, das beim Überführen des Wechselbehälters in den Aufnahmebereich oder aus dem Aufnahmebereich zwischen dem Führungsmittel und dem Aufnahmeboden angeordnet ist und zumindest abschnittsweise an der Führungsfläche des schienenartigen Führungsmittels berührend gleitbar oder abrollbar und gegen ein Bewegen quer zur Überführungsrichtung abstützbar oder abgestützt ist, wobei zumindest die Führungsfläche des mindestens einen Führungsmittels bezüglich des Aufnahmebodens eine Neigung aufweist.

Aus dem Stand der Technik sind Systeme aus Fahrzeugen und Wechselbehälter bekannt, mit denen Wechselbehälter transportierbar sind, bei denen zum Festlegen der Wechselbehälter U-Profile im Aufnahmebereich angeordnet sind, in denen die Wechselbehälter mit ihren Rollen geführt anordenbar sind. Die Führung erfolgt über die Seitenwände der U-Profile, die direkt mit den Flanken der Rollen der Wechselbehälter in Kontakt stehen. Bei einer derartigen Festlegevorrichtung hat es sich als nachteilig herausgestellt, dass die Rollen der Wechselbehälter einem hohen Verschleiß unterliegen sowie stets ein identischer Radstand der Vorder- und Hinterräder der Wechselbehälter notwendig ist.

Darüber hinaus sind Systeme aus Fahrzeugen und Wechselbehälter zum Transport von Wechselbehältern bekannt, bei denen die Wechselbehälter beim Überführen in den Aufnahmebereich nicht oder nur unzureichend geführt werden und über einen Formschluss festgelegt werden. Hierbei hat es sich als nachteilig herausgestellt, den Wechselbehälter auch bei schlechter Einblicknahme auf den Aufnahmebereich so auszurichten, dass der Formschluss herstellbar ist.

Ferner kann beim Fahren mit dem Fahrzeug über Unebenheiten in der Fahrbahn eine Relativbewegung zwischen Wechselbehälter und Aufnahmebereich in Richtung quer zum Aufnahmeboden aufgrund von Trägheitskräften nie ganz vermieden werden, was zu Beschädigungen am Wechselbehälter und/oder dem Aufnahmeboden führen kann.

US 4,805,859 zeigt eine Festlegevorrichtung, bei der ein Führungsmittel am Aufnahmeboden anliegt. EP 2 420 406 A zeigte eine Festlegevorrichtung, bei der ein Behälter an einem schienenartigen Sicherungsmittel befestigbar ist.

Eine Aufgabe eines Ausführungsbeispiels der Erfindung ist, bei einem System aus Fahrzeug und Wechselbehälter ein Anordnen und Festlegen eines Wechselbehälters in oder an einem Aufnahmebereich des Fahrzeugs zu erleichtern und zu verbessern.

Diese Aufgabe wird bei einem eingangs genannten System aus Fahrzeug und Wechselbehälter gelöst durch mindestens ein an der Stützstruktur oder am Wechselbehälter angeordnetes Haltemittel vorgesehen, das von einer Sperrstellung, in der es in eine Aufnahme am Wechselbehälter bzw. an der Stützstruktur eingreift und den Wechselbehälter gegen ein Bewegen in Überführungsrichtung festlegt, in eine Freigabestellung überführbar ist, in der der Wechselbehälter für ein Bewegen in Überführungsrichtung freigegeben ist, wobei das Haltemittel am Aufnahmeboden des Aufnahmebereichs angeordnet ist und quer zur Überführungsrichtung von der Sperrstellung in die Freigabestellung und zurück überführbar ist.

Dadurch, dass zumindest die Führungsfläche des mindestens einen Führungsmittels bezüglich des Aufnahmebodens eine Neigung aufweist, ist der Wechselbehälter in zwei Richtungen quer zur Überführungsrichtung gehalten. Hierdurch ist gewährleistet, dass der Wechselbehälter nicht nur bei Kurvenfahrten, sondern auch bei Unebenheiten der Fahrbahn am Aufnahmeboden anliegt und relativ zur Stützstruktur im Wesentlichen ortsfest festgelegt ist.

Der Wechselbehälter kann beispielsweise mittels Reifen oder Rollen in oder an dem Aufnahmebereich angeordnet werden. Hierzu kann bei einer Ausführungsform der Festlegevorrichtung eine Rampe vorgesehen sein, mit der der Wechselbehälter auf den Aufnahmeboden des Aufnahmebereichs rollbar ist. Hierdurch kann ein Höhenunterschied zwischen Fahrbahn und Aufnahmeboden überwunden werden.

Darüber hinaus ist es denkbar, dass der Wechselbehälter auf Kufen oder Dergleichen auf dem Aufnahmeboden des Aufnahmebereichs anordenbar ist.

Durch das Vorsehen der Führungsmittel ist der Wechselbehälter linear führbar.

Die Überführungsrichtung kann parallel zu einer Fahrzeuglängsachse oder einer Fahrzeugquerachse erfolgen. Darüber hinaus sind Zwischenformen denkbar, beispielsweise, dass die Überführungsrichtung schräg zur Fahrzeuglängsachse verläuft.

Durch das Haltemittel kann der Wechselbehälter nach dem Anordnen im Aufnahmebereich gegen ein Bewegen in oder entgegen der Überführungsrichtung festgelegt werden.

Das Haltemittel kann einen Form- oder Kraftschluss zwischen Wechselbehälter und Aufnahmebereich herstellen.

Bei dem Fahrzeug kann es sich um ein beliebiges Fahrzeug handeln, insbesondere ein Landfahrzeug, Wasserfahrzeug und/oder Luftfahrzeug. Wenn es sich bei dem Fahrzeug um ein Landfahrzeug handelt, kann es sich um einen Personenkraftwagen, einen Lastkraftwagen oder um ein Neigefahrzeug handeln. Unter einem Neigefahrzeug werden Fahrräder; Pedelecs, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Wenn das Fahrzeug ein Neigefahrzeug umfasst, erweist es sich als vorteilhaft, wenn dieses einen Fahrerbereich und einen in Fahrtrichtung davor oder dahinter angeordneten einen lastaufnehmenden Aufnahmebereich umfasst.

Um die Aufnahme unterschiedlicher Wechselbehälter auf einfache Weise gewährleisten zu können, ist bei einer Ausführungsform der Festlegevorrichtung eine Einstelleinheit vorgesehen, durch die die Neigung der Führungsfläche des Führungsmittels bezüglich des Aufnahmebodens stufenweise oder stufenlos einstellbar ist.

Zudem lässt sich das Anpassen der Festlegevorrichtung für eine Vielzahl von Wechselbehältern weiterverbessern, wenn die Festlegevorrichtung mindestens eine Spanneinheit umfasst, die mindestens ein Spannmittel umfasst, durch das das Führungsmittel in Richtung auf das Stützmittel und/oder durch das das Stützmittel in Richtung auf das Führungsmittel spannbar ist.

Die Spanneinheit und die Einstelleinheit können eine gemeinsame Komponente umfassen. Ferner ist es denkbar, dass Einstelleinheit und Spanneinheit voneinander separate oder separierbare Bauteile umfassen.

Es erweist sich als vorteilhaft, wenn das Führungsmittel und die Stützstruktur oder wenn das Führungsmittel und der Wechselbehälter lösbar oder unlösbar aneinander festlegbar oder festgelegt sind oder ein gemeinsames Bauteil umfassen und/oder wenn das Stützmittel und die Stützstruktur oder wenn das Stützmittel und der Wechselbehälter lösbar oder unlösbar aneinander festlegbar oder festgelegt sind oder ein gemeinsames Bauteil umfassen.

Wenn das Führungsmittel und die Stützstruktur oder das Führungsmittel und der Wechselbehälter lösbar oder unlösbar aneinander festlegbar oder festgelegt sind, kann das Führungsmittel auf einfache Weise ausgetauscht oder repariert werden. Wenn das Führungsmittel und die Stützstruktur oder das Führungsmittel und der Wechselbehälter ein gemeinsames Bauteil umfassen, kann die Festlegevorrichtung bauteilreduziert ausgebildet sein.

Gleiches gilt entsprechend für das Stützmittel.

Das Führungsmittel und das Stützmittel können grundsätzlich auf einer beliebigen Höhe bezüglich des Aufnahmebodens angeordnet sein. Es erweist sich als vorteilhaft, wenn das Führungsmittel und das Stützmittel auf Höhe einer dem Aufnahmeboden zugewandten Oberfläche des Wechselbehälters angeordnet sind, deren Abstand zum Aufnahmeboden minimal ist.

Bei einer Weiterbildung der Festlegevorrichtung ist vorgesehen, dass das Stützmittel mindestens ein Stützelement umfasst, das zumindest abschnittsweise an der Führungsfläche des schienenartigen Führungsmittels berührend gleitbar oder abrollbar ist und insbesondere eine Kufe oder eine Rolle umfasst und/oder dass das Stützmittel mindestens ein Trägerelement umfasst, mit dem das Stützmittel am Wechselbehälter oder an der Stützstruktur festlegbar ist und an dessen einem Ende das Stützelement anordenbar ist.

Durch das Vorsehen eines Stützelements und eines Trägerelements kann das Stützmittel auf einfache Weise am Wechselbehälter oder an der Stützstruktur festgelegt werden. Das Stützelement kann beispielsweise kufenartig ausgebildet sein und an der Führungsfläche des Führungsmittels beim Überführen des Wechselbehälters in den Aufnahmebereich oder aus dem Aufnahmebereich heraus berührend entlanggleiten. Darüber hinaus kann das Stützelement rollenartig ausgebildet sein und entlang des Führungsmittels abrollen. Solchenfalls ist das rollenartig ausgebildete Stützelement mittels eines Lagers an dem Trägerelement festgelegt.

Grundsätzlich kann das Führungsmittel sowohl an der Stützstruktur des Aufnahmebereichs als auch am Wechselbehälter angeordnet sein. Das Stützmittel ist hierbei an dem jeweils anderen Bauteil angeordnet. Mit anderen Worten, wenn das Führungsmittel an der Stützstruktur des Aufnahmebereichs angeordnet ist, ist das Stützmittel am Wechselbehälter angeordnet. Wenn das Führungsmittel am Wechselbehälter angeordnet ist, ist das Stützmittel an der Stützstruktur des Aufnahmebereichs angeordnet.

Bei einer Ausführungsform der Festlegevorrichtung ist vorgesehen, dass mindestens ein Führungsmittel an der Stützstruktur des Aufnahmebereichs angeordnet ist und/oder dass mindestens ein Stützmittel am Wechselbehälter angeordnet ist.

Um die Stabilität der Anordnung des Wechselbehälters innerhalb des Aufnahmebereichs weiter zu erhöhen, sind bei einer Ausführungsform der Festlegevorrichtung mindestens zwei Führungsmittel und mindestens zwei Stützmittel vorgesehen, die jeweils auf einander gegenüberliegenden Seiten angeordnet sind und der Wechselbehälter zwischen den beiden Führungsmitteln und Stützmitteln angeordnet ist.

Grundsätzlich ist es denkbar, dass die beiden Führungsmittel und die beiden Stützmittel jeweils auf der gleichen Seite des Wechselbehälters angeordnet sind. Solchenfalls können diese in unterschiedlicher Höhe zueinander angeordnet sein. Ferner ist es denkbar, dass die Führungsmittel jeweils auf unterschiedlichen Seiten des Wechselbehälters angeordnet sind. Hierdurch ist die Stabilität des Wechselbehälters beim Anordnen im Aufnahmebereich weiter erhöht. Die beiden Führungsmittel, bzw. die beiden Stützmittel, können auf gleicher Höhe, insbesondere mit gleichem Abstand zum Aufnahmeboden, angeordnet sein oder unterschiedliche Höhe, insbesondere Abstand zum Fahrzeugboden, umfassen.

Es erweist sich als vorteilhaft, wenn das Stützmittel mindestens zwei Stützelemente umfasst, die an einander gegenüberliegenden Seiten des Trägerelements angeordnet sind und
über die Breite des Wechselbehälters - quer zur Überführungsrichtung betrachtet - erstreckt ist.

Solchenfalls kann das Stützmittel sich an zwei einander gegenüberliegenden Führungsmitteln abstützen. Hierdurch ist die Festlegevorrichtung bauteilreduziert ausbildbar.

Um ein Anordnen des Wechselbehälters am Aufnahmebereich zu erleichtern, erweist es sich als vorteilhaft, wenn die Festlegevorrichtung mindestens eine Zentrierungseinheit umfasst, die zumindest die mindestens zwei Führungsmittel umfasst, die zusammen einen trichterartigen Abschnitt umfassen, durch den der Wechselbehälter beim Überführen auf oder in den Aufnahmebereich im wesentlich mittig im Aufnahmebereich angeordnet wird.

Hierdurch ist auf einfache Weise eine Führung des Wechselbehälters beim Überführen in den Aufnahmebereich gewährleistet.

Bei einer Weiterbildung letztgenannter Ausführungsform erweist es sich als vorteilhaft, wenn das Haltemittel bolzenartig ausgebildet ist und in oder quer zur Überführungsrichtung von der Sperrstellung in die Freigabestellung und zurück überführbar ist.

Hierdurch ist das Haltemittel einfach und kostengünstig herstellbar.

Darüber hinaus erweist es sich bei einer weiteren Weiterbildung als vorteilhaft, wenn das Haltemittel mindestens ein Rückstellmittel umfasst, durch das das Haltemittel in die Sperrstellungen vorspannbar ist.

Hierdurch kann gewährleistet werden, dass das Haltemittel automatisch mit dem Wechselbehälter verrastet, sobald sich dieser im Aufnahmebereich befindet.

Zum Lösen des Haltemittels kann am Haltemittel ein mechanisches oder elektromechanisches Entriegelungsmittel vorgesehen sein, das beispielsweise durch einen Benutzer des Fahrzeugs manuell betätigbar ist, um den Wechselbehälter vom Haltemittel zu lösen.

Um Fertigungstoleranzen des Wechselbehälters, insbesondere der Aufnahme und des Haltemittels auszugleichen, ist bei einer Ausführungsform der Festlegevorrichtung vorgesehen, dass die Aufnahme eine sich in Überführungsrichtung verjüngende Kontur umfasst, an der das Haltemittel in der Sperrstellung anliegt.

Hierdurch kann eine im Wesentlichen spielfreies Festlegen des Haltemittels in der Aufnahme gewährleistet werden.

Schließlich wird die Aufgabe gelöst durch ein Fahrzeug mit einem Aufnahmebereich in dem ein Wechselbehälter durch eine Festlegevorrichtung mit mindestens einem der zuvor genannten Merkmale festlegbar ist, welche mindestens eine im Aufnahmebereich angeordnete Stützstruktur, welche mindestens einen im Aufnahmebereich angeordneten Aufnahmeboden, an dem der Wechselbehälter anliegend und relativ zur Stützstruktur im Wesentlichen ortsfest festgelegt ist, welche mindestens ein zum Aufnahmeboden beabstandetes schienenartiges Führungsmittel, das an der Stützstruktur oder am Wechselbehälter festgelegt ist und das eine Führungsfläche aufweist, und welche mindestens ein am Wechselbehälter bzw. an der Stützstruktur angeordnetes Stützmittel umfasst, das beim Überführen des Wechselbehälters in den Aufnahmebereich oder aus dem Aufnahmebereich zwischen dem Führungsmittel und dem Aufnahmeboden angeordnet ist und zumindest abschnittsweise an der Führungsfläche des schienenartigen Führungsmittels berührend gleitbar oder abrollbar und gegen ein Bewegen quer zur Überführungsrichtung abstützbar oder abgestützt ist, wobei zumindest die Führungsfläche des mindestens einen Führungsmittels bezüglich des Aufnahmebodens eine Neigung aufweist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Festlegevorrichtung.

In der Zeichnung zeigt:
- Figur 1: Eine ausschnittsweise Rückansicht auf ein Fahrzeug mit einer erfindungsgemäßen Festlegevorrichtung;
- Figur 2: Eine Detailansicht eines Bereichs gemäß Figur 1 ;
- Figur 3: Eine perspektivische Draufsicht auf ein Stützmittel einer Festlegevorrichtung;
- Figur 4: Eine Unteransicht auf einen Wechselbehälter mit zwei Stützmitteln;
- Figur 5: Eine perspektivische Draufsicht auf einen Aufnahmebereich des Fahrzeugs;
- Figur 6: Eine Draufsicht auf den Aufnahmebereich des Fahrzeugs gemäß Figur 5.

Die Figuren zeigen eine insgesamt mit dem Bezugszeichen 2 versehene Festlegevorrichtung zum Festlegen eines Wechselbehälters 4 in oder an einem Aufnahmebereich 6 eines Fahrzeugs 8. Im Aufnahmebereich 6 des Fahrzeugs 8 ist eine Stützstruktur 10 angeordnet. Ferner umfasst der Aufnahmebereich 6 des Fahrzeugs 8 einen im Aufnahmebereich 6 angeordneten Aufnahmeboden 12.

Die Festlegevorrichtung 2 umfasst mindestens ein zum Aufnahmeboden 12 beabstandetes, schienenartiges Führungsmittel 14. Bei den in den Figuren gezeigten Ausführungsbeispielen ist das schienenartige Führungsmittel an der Stützstruktur 10 des Fahrzeugs 8 festgelegt. Das Führungsmittel 14 umfasst eine Führungsfläche 16. Darüber hinaus umfasst die Festlegevorrichtung 2 Stützmittel 18, die bei den in den Figuren gezeigten Ausführungsbeispielen am Wechselbehälter 4 festgelegt sind. Die Stützmittel 18 umfassen zwei Stützelemente 20, die rollenartig ausgebildet sind und an einem Trägerelement 22 festgelegt sind. Die Stützmittel 18 sind über die Trägerelemente 22 am Boden des Wechselbehälters 4 festgelegt. Darüber hinaus liegen die Stützelemente 20 des Stützmittels 18 an den Führungsflächen 16 der Führungsmittel 14 an, wenn der Wechselbehälter 4 im Aufnahmebereich 6 angeordnet ist.

Beim Überführen und Anordnen des Wechselbehälters 4 im Aufnahmebereich 6 des Fahrzeugs 8, stützt sich der Wechselbehälter 4 über die Stützmittel 18 an den Führungsflächen 16 ab und ist an diesen berührend gleitbar oder abrollbar gegen ein Bewegen quer zur Überführungsrichtung gestützt. Die Führungsfläche 16 sind bezüglich des Aufnahmebodens 12 geneigt.

Um die Neigung der Führungsfläche 16 des Führungsmittels 14 einstellen zu können, umfasst die Festlegevorrichtung 2 eine Einstelleinheit 24, durch die die Neigung der Führungsfläche 16 bezüglich des Aufnahmebogens 12 einstellbar ist.

Die Figuren zeigen ein Ausführungsbeispiel der Festlegevorrichtung 2, bei der die Führungsmittel 14 an der Stützstruktur 10 des Fahrzeugs 6 lösbar festgelegt sind. Auch die Stützmittel 18 sind lösbar am Wechselbehälter 4 festgelegt.

Führungsmittel 14 und Stützmittel 18 sind an einer dem Aufnahmeboden 12 zugewandten Oberfläche des Wechselbehälters 4 angeordnet, wodurch der Abstand zum Aufnahmeboden 12 minimal ist.

Um ein Führen des Wechselbehälters beim Überführen in den Aufnahmebereich 6 zu gewährleisten, sind bei dem in den Figuren gezeigten Ausführungsbeispiel zwei Führungsmittel 14 vorgesehen, die aufeinander gegenüberliegenden Seiten bezüglich des Wechselbehälters 4 angeordnet sind. Hierdurch ist der Wechselbehälter 4 beidseits durch die Führungsmittel 14 gehalten.

Um den Wechselbehälter 4 gegen ein Bewegen in Überführungsrichtung festzulegen, umfasst die Festlegevorrichtung 2 ein bolzenartiges Haltemittel 26, das im Aufnahmeboden 12 festgelegt ist. Das bolzenartige Haltemittel 26 kann in einer korrespondierend ausgebildeten Aufnahme 28 im Wechselbehälter 4 eingreifen, wenn der Wechselbehälter 4 im Aufnahmebereich 6 angeordnet ist. Hierzu ist das Haltemittel 26 durch ein in den Figuren nicht ersichtliches Rückstellmittel in eine Sperrstellung vorgespannt, in der das Haltemittel 26 in die Aufnahme 28 eingreift. Um den Wechselbehälter 4 aus dem Aufnahmebereich 6 zu entfernen, ist das Haltemittel 26 von der Sperrstellung in eine Freigabestellung überführbar, in der das Haltemittel 26 außer Eingriff mit der Aufnahme 28 im Wechselbehälter 4 ist.

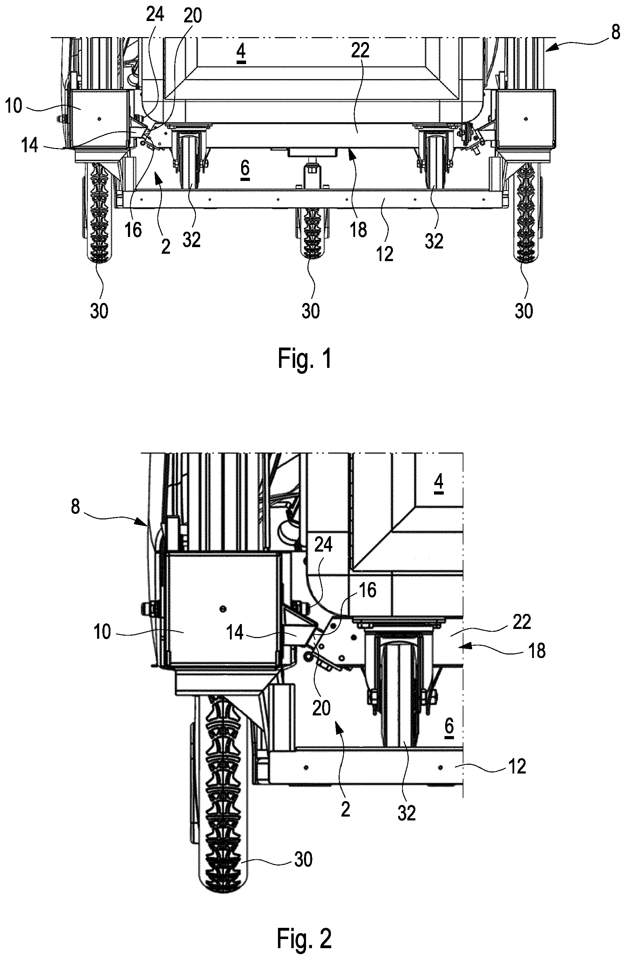

Figur 1 zeigt eine Ansicht eines Bereichs des Fahrzeugs 8. Dieses umfasst bei dem in der Figur gezeigten Ausführungsbeispiel ein Lastenfahrrad. Hierzu umfasst das Fahrzeug 8 drei Räder 30, mit denen das Fahrzeug 8 auf einer Fahrbahn fahrbar ist. Der Wechselbehälter 4 umfasst seinerseits Rollen 32, mit denen der Wechselbehälter 4 beispielsweise über eine Rampe in den Aufnahmebereich 6 einbringbar ist.

Aus Figur 1 ist ersichtlich, dass der Wechselbehälter 4 durch die Festlegevorrichtung 2 im Wesentlichen zentrisch im Aufnahmebereich 6 des Fahrzeugs 8 angeordnet ist. Hierdurch ist es ermöglicht, dass der Masseschwerpunkt des Wechselbehälters 4 mit dem Masseschwerpunkt des Fahrzeugs 8 quer zur Fahrtrichtung fluchtet, wodurch die Fahreigenschaften des Fahrzeugs 8 verbessert sind.

Figur 2 zeigt eine Detailansicht eines Bereichs gemäß Figur 1.

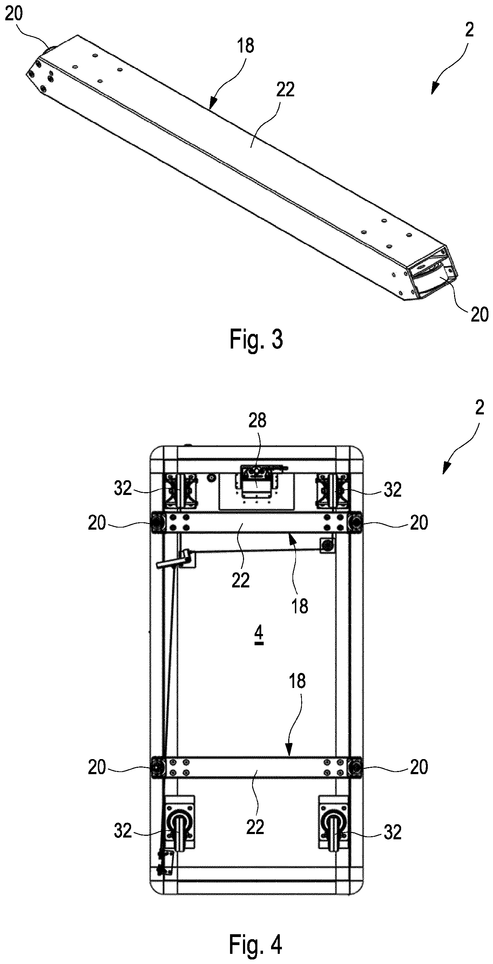

Figur 3 zeigt eine Detailansicht des Stützmittels 18. Aus Figur 3 ist ersichtlich, dass das Stützmittel 18 ein Trägerelement 22 umfasst, an dessen freien Enden die rollenartigen Stützelemente 20 ausgebildet sind.

Aus Figur 4 ist ersichtlich, dass die Stützmittel 18 gemäß Figur 3 im vorderen und im hinteren Bereich des Wechselbehälters 4 anordenbar sind. Diese sind gemäß Ausführungsbeispiel Figur 4 lösbar mit dem Boden des Wechselbehälters 4 verschraubt.

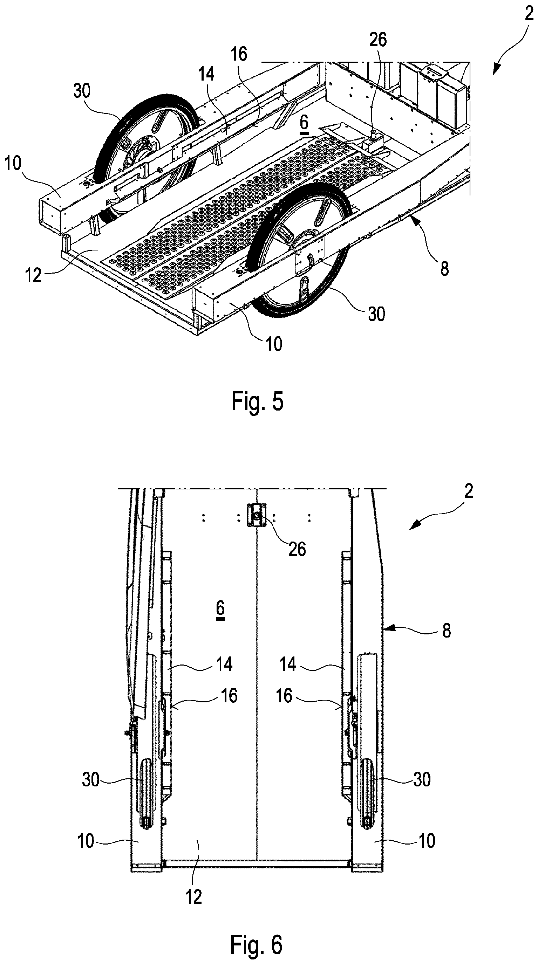

Die Figuren 5 und 6 zeigen einen Aufnahmebereich 6 des Fahrzeugs 8.

### Bezugszeichenliste

- 2: Festlegevorrichtung
- 4: Wechselbehälter
- 6: Aufnahmebereich
- 8: Fahrzeug
- 10: Stützstruktur
- 12: Aufnahmeboden
- 14: Führungsmittel
- 16: Führungsfläche
- 18: Stützmittel
- 20: Stützelement
- 22: Trägerelement
- 24: Einstelleinheit
- 26: Haltemittel
- 28: Aufnahme
- 30: Räder
- 32: Rollen

## Patentansprüche

1. System aus Fahrzeug (8) und Wechselbehälter (4) mit einem Aufnahmebereich (6) des Fahrzeugs und mit mindestens einer Festlegevorrichtung (2) zum Festlegen des Wechselbehälters (4) in oder an dem Aufnahmebereich (6) des Fahrzeugs (8), die mindestens eine im Aufnahmebereich (6) angeordnete Stützstruktur (10), die mindestens einen im Aufnahmebereich (6) angeordneten Aufnahmeboden (12), die mindestens ein zum Aufnahmeboden (12) beabstandetes schienenartiges Führungsmittel (14), das an der Stützstruktur (10) oder am Wechselbehälter (4) festgelegt ist und das eine Führungsfläche (16) aufweist, und die mindestens ein am Wechselbehälter (4), bzw. an der Stützstruktur (10) angeordnetes Stützmittel (18) umfasst, das beim Überführen des Wechselbehälters (4) in den Aufnahmebereich (6) oder aus dem Aufnahmebereich (6) zwischen dem Führungsmittel (14) und dem Aufnahmeboden (12) angeordnet ist und zumindest abschnittsweise an der Führungsfläche (16) des schienenartigen Führungsmittels (14) berührend gleitbar oder abrollbar und gegen ein Bewegen quer zur Überführungsrichtung abstützbar oder abgestützt ist, wobei zumindest die Führungsfläche (16) des mindestens einen Führungsmittels (14) bezüglich des Aufnahmebodens (12) eine Neigung aufweist, **gekennzeichnet durch** mindestens ein an der Stützstruktur (10) oder am Wechselbehälter (4) angeordnetes Haltemittel (26), das von einer Sperrstellung, in der es in eine Aufnahme (28) am Wechselbehälter (4), bzw. an der Stützstruktur (10) eingreift und den Wechselbehälter (4) gegen ein Bewegen in Überführungsrichtung festlegt, in eine Freigabestellung überführbar ist, in der der Wechselbehälter (4) für ein Bewegen in Überführungsrichtung freigegeben ist, wobei das Haltemittel (26) am Aufnahmeboden (12) des Aufnahmebereichs (6) angeordnet ist und quer zur Überführungsrichtung von der Sperrstellung in die Freigabestellung und zurück überführbar ist.

2. System nach Anspruch 1, **gekennzeichnet durch** mindestens eine Einstelleinheit (24), durch die die Neigung der Führungsfläche (16) des Führungsmittels (14) bezüglich des Aufnahmebodens (12) stufenweise oder stufenlos einstellbar ist.

3. System nach Anspruch 1 oder 2, **gekennzeichnet durch** mindestens eine Spanneinheit, die mindestens ein Spannmittel umfasst, durch das das Führungsmittel (14) in Richtung auf das Stützmittel (18) und/oder durch das das Stützmittel (18) in Richtung auf das Führungsmittel (14) spannbar ist.

4. System nach mindestens einem der vorhergehenden Ansprüche, **dadurch gekennzeichnet, dass** das Führungsmittel (14) und die Stützstruktur (10) oder dass das Führungsmittel (14) und der Wechselbehälter (4) lösbar oder unlösbar aneinander festlegbar oder festgelegt sind oder ein gemeinsames Bauteil umfassen und/oder dass das Stützmittel (18) und die Stützstruktur (10) oder dass das Stützmittel (18) und der Wechselbehälter(4) lösbar oder unlösbar aneinander festlegbar oder festgelegt sind oder ein gemeinsames Bauteil umfassen.

5. System nach mindestens einem der vorhergehenden Ansprüche, **dadurch gekennzeichnet, dass** das Führungsmittel (14) und das Stützmittel (18) auf Höhe einer dem Aufnahmeboden (12) zugewandten Oberfläche des Wechselbehälters (4) angeordnet sind, deren Abstand zum Aufnahmeboden (12) minimal ist.

6. System nach mindestens einem der vorhergehenden Ansprüche, dass das Stützmittel (18) mindestens ein Stützelement (20) umfasst, das zumindest abschnittsweise an der Führungsfläche (16) des schienenartigen Führungsmittels (14) berührend gleitbar oder abrollbar ist und insbesondere eine Kufe oder eine Rolle umfasst und/oder dass das Stützmittel (18) mindestens ein Trägerelement (22) umfasst, mit dem das Stützmittel (18) am Wechselbehälter (4) oder an der Stützstruktur (10) festlegbar ist und an dessen einem Ende das Stützelement (20) anordenbar ist.

7. System nach mindestens einem der vorhergehenden Ansprüche, **dadurch gekennzeichnet, dass** mindestens ein Führungsmittel (14) an der Stützstruktur (10) des Aufnahmebereichs (6) angeordnet ist und/oder dass mindestens ein Stützmittel (18) am Wechselbehälter (4) angeordnet ist.

8. System nach mindestens einem der vorhergehenden Ansprüche, **gekennzeichnet durch** mindestens zwei Führungsmittel (14) und durch mindestens zwei Stützmittel (18), die jeweils auf einander gegenüberliegenden Seiten angeordnet sind und der Wechselbehälter (4) zwischen den beiden Führungsmitteln (14) und Stützmitteln (18) angeordnet ist.

9. System nach einem der Ansprüche 6 bis 8, **dadurch gekennzeichnet, dass** das Stützmittel (18) mindestens zwei Stützelemente (20) umfasst, die an einander gegenüberliegenden Seiten des Trägerelements (22) angeordnet sind und dass über die Breite des Wechselbehälters (4) - quer zur Überführungsrichtung betrachtet - erstreckt ist.

10. System nach Anspruch 8 oder 9, **gekennzeichnet durch** eine Zentrierungseinheit, die zumindest die mindestens zwei Führungsmittel (14) umfasst, die zusammen einen trichterartigen Abschnitt umfassen, durch den der Wechselbehälter (4) beim Überführen auf oder in den Aufnahmebereich (6) im wesentlich mittig im Aufnahmebereich (6) angeordnet wird.

11. System nach einem der vorhergehenden Ansprüche, **dadurch gekennzeichnet, dass** das Haltemittel (26) bolzenartig ausgebildet ist und in oder quer zur Überführungsrichtung von der Sperrstellung in die Freigabestellung und zurück überführbar ist.

12. System nach einem der vorhergehenden Ansprüche, **dadurch gekennzeichnet, dass** das Haltemittel (26) mindestens ein Rückstellmittel umfasst, durch das Haltemittel (26) in die Sperrstellung vorspannbar ist.

13. System nach einem der vorhergehenden Ansprüche, **dadurch gekennzeichnet, dass** die Aufnahme (28) eine sich in Überführungsrichtung verjüngende Kontur umfasst, an der das Haltemittel (26) in der Sperrstellung anliegt.

## Claims

1. System comprising a vehicle (8) and a swap body (4) with a receiving area (6) of the vehicle and with at least one fixing device (2) for fixing the swap body (4) in or on the receiving area (6) of the vehicle (8), which comprises at least one support structure (10) arranged in the receiving area (6), which has at least one receiving base (12) arranged in the receiving area (6), which has at least one rail-like guide means (14) which is spaced apart from the receiving base (12), which is fixed to the support structure (10) or to the swap body (4) and which has a guide surface (16), and which has at least one support means (18) arranged on the swap body (4) or on the support structure (10), and which has at least one guide surface (16) arranged on the support structure (10) or on the swap body (4) which is arranged between the guide means (14) and the receiving base (12) when the swap body (4) is transferred into the receiving area (6) or out of the receiving area (6) and can slide or roll at least in sections in contact with the guide surface (16) of the rail-like guide means (14) and can be supported or is supported against movement transversely to the transfer direction, wherein at least the guide surface (16) of the at least one guide means (14) has an inclination with respect to the receiving base (12), **characterised by** at least one holding means (26) arranged on the support structure (10) or on the swap body (4), which can be moved from a locking position, in which it is engaged in a receiving means (28) on the swap body (4), or on the support structure (10) and secures the swap body (4) against movement in the transfer direction, into a release position in which the swap body (4) is released for movement in the transfer direction, wherein the retaining means (26) is arranged on the receiving base (12) of the receiving area (6) and can be transferred transversely to the transfer direction from the locking position into the release position and back.

2. System according to claim 1, **characterised by** at least one adjusting unit (24), by means of which the inclination of the guide surface (16) of the guide means (14) with respect to the receiving base (12) can be adjusted in a stepped or step-free manner.

3. System according to claim 1 or 2, **characterised by** at least one clamping unit which comprises at least one clamping means by which the guide means (14) can be clamped in the direction of the support means (18) and/or by which the support means (18) can be clamped in the direction of the guide means (14).

4. System according to at least one of the preceding claims, **characterised in that** the guide means (14) and the support structure (10) or that the guide means (14) and the swap body (4) can be detachably or non-detachably fixed or secured to one another or comprise a common component and/or that the support means (18) and the support structure (10) or that the support means (18) and the swap body (4) can be detachably or non-detachably fixed or secured to one another or comprise a common component.

5. System according to at least one of the preceding claims, **characterised in that** the guide means (14) and the support means (18) are arranged at the level of a surface of the swap body (4) facing the receiving base (12), the distance of which to the receiving base (12) is minimal.

6. System according to at least one of the preceding claims, in that the support means (18) comprises at least one support element (20), which can slide or roll at least in sections in contact with the guide surface (16) of the rail-like guide means (14) and in particular comprises a runner or a roller and/or in that the support means (18) comprises at least one carrier element (22), with which the support means (18) can be fixed to the swap body (4) or to the support structure (10) and at one end of which the support element (20) can be arranged.

7. System according to at least one of the preceding claims, **characterised in that** at least one guide means (14) is arranged on the support structure (10) of the receiving area (6) and/or **in that** at least one support means (18) is arranged on the swap body (4).

8. System according to at least one of the preceding claims, **characterised by** at least two guide means (14) and by at least two support means (18), which are each arranged on opposite sides and the swap body (4) is arranged between the two guide means (14) and support means (18).

9. System according to one of claims 6 to 8, **characterised in that** the support means (18) comprises at least two support elements (20) which are arranged on opposite sides of the carrier element (22) and which extend over the width of the swap body (4) - viewed transversely to the transfer direction.

10. System according to claim 8 or 9, **characterised by** a centring unit comprising at least the at least two guide means (14) which together comprise a funnel-like section through which the swap body (4) is arranged substantially centrally in the receiving area (6) during transfer to or into the receiving area (6).

11. System according to one of the preceding claims, **characterised in that** the holding means (26) is bolt-like and can be transferred in or transversely to the transfer direction from the locking position to the release position and back.

12. System according to one of the preceding claims, **characterised in that** the holding means (26) comprises at least one resetting means by which the holding means (26) can be biased into the locking position.

13. System according to one of the preceding claims, **characterised in that** the receiving means (28) comprises a contour which tapers in the transfer direction and against which the holding means (26) bears in the locking position.

## Revendications

1. Système composé d'un véhicule (8) et d'un conteneur interchangeable (4) avec une zone de réception (6) du véhicule et avec au moins un dispositif de fixation (2) pour fixer le conteneur interchangeable (4) dans ou sur la zone de réception (6) du véhicule (8), qui comprend au moins une structure de soutien (10) disposée dans la zone de réception (6), au moins un plancher de réception (12) disposé dans la zone de réception (6), au moins un moyen de guidage (14) en forme de rail, espacé du plancher de réception (12), qui est fixé à la structure de soutien (10) ou au conteneur interchangeable (4) et qui présente une surface de guidage (16), et au moins un moyen de soutien (18) disposé sur le conteneur interchangeable (4), ou sur la structure de soutien (10), qui est disposé entre le moyen de guidage (14) et le plancher de réception (12) lors du transfert du conteneur interchangeable (4) dans la zone de réception (6) ou hors de la zone de réception (6) et qui peut glisser ou rouler au moins par sections en contact avec la surface de guidage (16) du moyen de guidage (14) en forme de rail et qui peut être soutenu ou s'opposer à un déplacement transversalement à la direction de transfert, au moins la surface de guidage (16) d'au moins un moyen de guidage (14) présentant une inclinaison par rapport au plancher de réception (12), **caractérisé par** au moins un moyen de maintien (26) disposé sur la structure de soutien (10) ou sur le conteneur interchangeable (4), qui peut être déplacé d'une position de blocage, dans laquelle il est inséré dans un support (28) sur le conteneur interchangeable (4), ou sur la structure de soutien (10), vers une position d'arrêt, dans laquelle il peut être déplacé vers le haut. et bloque le conteneur interchangeable (4) contre un déplacement dans la direction de transfert, dans une position de libération dans laquelle le conteneur interchangeable (4) est libéré pour un déplacement dans la direction de transfert, le moyen de maintien (26) étant disposé sur le plancher de réception (12) de la zone de réception (6) et pouvant être transféré transversalement à la direction de transfert de la position de blocage à la position de libération et inversement.

2. Système selon la revendication 1, **caractérisé par** au moins une unité de réglage (24), grâce à laquelle l'inclinaison de la surface de guidage (16) du moyen de guidage (14) par rapport au plancher de réception (12) peut être réglée de manière progressive ou continue.

3. Système selon la revendication 1 ou 2, **caractérisé par** au moins une unité de serrage qui comprend au moins un moyen de serrage par lequel le moyen de guidage (14) peut être serré en direction du moyen de soutien (18) et/ou par lequel le moyen de soutien (18) peut être serré en direction du moyen de guidage (14).

4. Système selon au moins l'une des revendications précédentes, **caractérisé en ce que** le moyen de guidage (14) et la structure de soutien (10) ou **en ce que** le moyen de guidage (14) et le conteneur interchangeable (4) peuvent être fixés l'un à l'autre de manière amovible ou inamovible ou comprennent un composant commun et/ou **en ce que** le moyen de support (18) et la structure de support (10) ou **en ce que** le moyen de support (18) et le conteneur interchangeable (4) peuvent être fixés l'un à l'autre de manière amovible ou inamovible ou comprennent un composant commun.

5. Système selon au moins l'une des revendications précédentes, **caractérisé en ce que** le moyen de guidage (14) et le moyen de soutien (18) sont disposés au niveau d'une surface du conteneur interchangeable (4) orientée vers le plancher de réception (12), dont la distance par rapport au plancher de réception (12) est minimale.

6. Système selon au moins l'une des revendications précédentes, en ce que le moyen de soutien (18) comprend au moins un élément de soutien (20) qui peut glisser ou rouler au moins par sections en contact avec la surface de guidage (16) du moyen de guidage (14) en forme de rail et qui comprend en particulier un patin ou un rouleau et/ou en ce que le moyen de soutien (18) comprend au moins un élément porteur (22) avec lequel le moyen de soutien (18) peut être fixé sur le conteneur interchangeable (4) ou sur la structure de soutien (10) et à une extrémité duquel l'élément de soutien (20) peut être disposé.

7. Système selon au moins l'une des revendications précédentes, **caractérisé en ce qu'**au moins un moyen de guidage (14) est disposé sur la structure de soutien (10) de la zone de réception (6) et/ou **en ce qu'**au moins un moyen de soutien (18) est disposé sur le conteneur interchangeable (4).

8. Système selon au moins l'une des revendications précédentes, **caractérisé par** au moins deux moyens de guidage (14) et par au moins deux moyens de soutien (18), disposés respectivement sur des côtés opposés l'un à l'autre, le conteneur interchangeable (4) étant disposé entre les deux moyens de guidage (14) et les moyens de soutien (18).

9. Système selon l'une des revendications 6 à 8, **caractérisé en ce que** le moyen de soutien (18) comprend au moins deux éléments de soutien (20) qui sont disposés sur des côtés opposés de l'élément porteur (22) et qui s'étend sur la largeur du conteneur interchangeable (4), transversalement à la direction de transfert.

10. Système selon la revendication 8 ou 9, **caractérisé par** une unité de centrage qui comprend au moins les au moins deux moyens de guidage (14) qui comprennent ensemble une section en forme d'entonnoir par laquelle le conteneur interchangeable (4) est placé essentiellement au centre de la zone de réception (6) lors du transfert sur ou dans la zone de réception (6).

11. Système selon l'une des revendications précédentes, **caractérisé en ce que** le moyen de maintien (26) est conçu à la manière d'un boulon et peut être transféré dans la direction de transfert ou transversalement à celle-ci de la position de blocage à la position de libération et inversement.

12. Système selon l'une des revendications précédentes, **caractérisé en ce que** le moyen de maintien (26) comprend au moins un moyen de rappel, par lequel le moyen de maintien (26) peut être précontraint dans la position de blocage.

13. Système selon l'une des revendications précédentes, **caractérisé en ce que** le support (28) comprend un contour qui se rétrécit dans la direction de transfert et contre lequel le moyen de maintien (26) s'appuie dans la position de blocage.
